# EUROPÄISCHE PATENTANMELDUNG

(11) **EP 2 261 476 A2**
(43) Veröffentlichungstag der Anmeldung: **15.12.2010**
(21) Anmeldenummer: 10164718.8
(22) Anmeldetag: 02.06.2010
(51) Int. Cl.: F01N 3/05, F01N 3/021, F01N 13/08, F01N 3/025, F01N 3/035, F01N 13/02

(54) **Abgasnachbehandlungssystem**

(30) Priorität: 08.06.2009 DE 102009026818
(71) Anmelder: Deere & Company, Moline, IL 61265-8098 (US)
(72) Erfinder: Back, Peter, 68789, St. Leon-Rot (DE); Hodel, Beatrice, 69469, Weinheim (DE)
(74) Vertreter: Reichert, Christian

(57) **Zusammenfassung**

Es wird ein Abgasnachbehandlungssystem (16) vorgeschlagen, welches einen Abgasstrang (14), einen Oxidationskatalysator (18), einen Rußpartikelfilter (20), eine Einrichtung (22) zum Rußabbrand im Rußpartikelfilter (20) sowie eine nachgeschaltete Einrichtung (24, 46) zur Reduzierung der Abgastemperatur im Abgasstrang (14) umfasst. Um den Kraftstoffverbrauch insgesamt zu reduzieren, wird vorgeschlagen, dass die Einrichtung (24, 46) zur Reduzierung der Abgastemperatur deaktivierbar ist.

## Beschreibung

Die Erfindung betrifft ein Abgasnachbehandlungssystem mit einem Abgasstrang, einem Oxidationskatalysator, einem Rußpartikelfilter, einer Einrichtung zum Rußabbrand im Rußpartikelfilter sowie einer nachgeschalteten Einrichtung zur Reduzierung der Abgastemperatur im Abgasstrang.

In Kraftfahrzeugen sind zur Erfüllung neuerer Abgasnormen Abgasnachbehandlungssystem vorgesehen, die durch Nachbehandlung des vom Verbrennungsmotor erzeugten und an die Umgebung abgegebenen Abgases eine Reduzierung der Schadstoffe im Abgas bewirken. Derartige Abgasnachbehandlungssysteme sind erforderlich, da allein durch Schadstoff reduzierende Maßnahmen im Verbrennungssystem die vom Gesetzgeber geforderten Richtwerte nicht oder nur mit sehr hohem Aufwand erreicht werden können. So sind beispielsweise Abgasnachbehandlungssysteme bekannt, die ein Rußpartikel- oder Dieselpartikelfilter mit vorgeschaltetem Oxidationskatalysator umfassen. Im Dieselpartikelfilter werden bei der Verbrennung entstehenden Rußpartikel zurückgehalten bzw. herausgefiltert. Das Dieselpartikelfilter ist derart dimensioniert, dass die maximal zulässige Rußbeladung nach einer bestimmten Betriebszeit erreicht wird, was durch einen Rußabbrand zu vermeiden ist, da es sonst zu ungewollt hohen Rußbelastungen im Dieselpartikelfilter und damit zu nachteilig hohen Abgasgegendrücken im Abgasstrang kommt. Ein Rußabbrand kann durch sogenannte passive oder aktive Regeneration im Abgasstrang erfolgen. Wird ein Verbrennungsmotor mit hoher Last betrieben, sind die Abgastemperaturen in der Regel hoch genug, dass ein kontinuierlicher Rußabbrand im Dieselpartikelfilter erfolgt. Diese sogenannte passive Regeneration findet etwa bei Abgastemperaturen oberhalb von 320°C statt. Um jedoch auch bei geringeren Motorlasten einen Rußabbrand zu gewährleisten werden sogenannte aktive Regenerationssysteme in Abgasnachbehandlungssystemen eingesetzt. Dabei wird die Rußbeladung im Dieselpartikelfilter ermittelt (bzw. über ein mathematisches Modell in Verbindung mit einer Messung des Differenzdrucks am Dieselpartikelfilter errechnet) und bei Überschreiten eines Schwellwertes die Abgastemperatur künstlich erhöht, indem beispielsweise Kraftstoff in den Abgasstrang eingespritzt wird, welcher dann unter Freisetzung von Wärme in dem Oxidationskatalysator oxidiert wird. Bei diesem Vorgang, der intervallmäßig für eine bestimmte Betriebszeit von ca. 20-25 Min. inszeniert wird, können höhere Abgastemperaturen entstehen, als im regulären Betrieb ohne aktiven Regenerationssystem üblich sind (oberhalb von 630°C). Um diese hohen Abgastemperaturen zu reduzieren wird üblicherweise ein im Abgasstrang nachgeschalteter Abgasdiffusor eingesetzt. Dadurch wird dem Abgas im Diffusor Umgebungsluft beigemischt und eine Reduzierung der Abgastemperatur erzielt. Nachteilig bei derartigen Abgasnachbehandlungssystemen mit Abgasdiffusor ist, dass durch Einsetzen eines Abgasdiffusors in den Abgasstrang ein erhöhter Abgasgegendruck erzeugt wird, so dass dauerhaft ein höherer Abgasgegendruck vorherrscht, obwohl nur während der aktiven Regenerationsphase zum Rußabbrand, welche durchschnittlich nur alle 6 Betriebsstunden für ca. 20-25 Min. erfolgt, eine Senkung der Abgastemperatur mittels Abgasdiffusor erforderlich ist. Durch den erhöhten Abgasgegendruck steigt die zu verrichtende Arbeit im Abgasstrang zum Ausschieben des Abgases, wodurch wiederum ein erhöhter Kraftstoffverbrauch zu verzeichnen ist. Insgesamt führt also der Einsatz eines Abgasdiffusors zu einem erhöhten Kraftstoffverbrauch.

Die der Erfindung zugrunde liegende Aufgabe wird darin gesehen, ein Abgasnachbehandlungssystem der eingangs genannten Art anzugeben, durch welches die vorgenannten Probleme überwunden werden.

Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Erfindungsgemäß wird ein Abgasnachbehandlungssystem der eingangs genannten Art derart ausgebildet, dass die Einrichtung zur Reduzierung der Abgastemperatur deaktivierbar ist. Das Abgasnachbehandlungssystem eignet sich insbesondere für mit Dieselkraftstoff betriebene Verbrennungsmotoren, die in ihrem Abgasstrang vorzugsweise einen Diesel-Oxidationskatalysator und ein Dieselpartikelfilter oder auch Rußpartikelfilter aufweisen. Das erfindungsgemäße Abgasnachbehandlungssystem ist jedoch nicht auf Dieselkraftstoffe begrenzt, sondern ist gleichermaßen auch für Biodieselkraftstoffe oder Kraftstoffe auf Rapsölbasis oder dergleichen geeignet. Dadurch, dass die Einrichtung zur Reduzierung der Abgastemperatur deaktivierbar ist, kann diese außerhalb der aktiven Regenerationszeiten, also bei Betreiben eines Verbrennungsmotors unter normaler bzw. hoher Last, bei der ein passives Regenerieren des Ruß- bzw. Dieselpartikelfilters durch Rußabbrand aufgrund einer regulären Abgastemperatur erfolgen kann, deaktiviert bzw. umgangen bzw. ausgeschaltet bzw. derart variiert werden, dass wirkungsgemäß die Abgastemperatur nicht mehr reduziert wird. Erst bei Unterschreiten eines im Abgasstrang gemessenen Temperaturwertes oder/und bei Überschreiten einer gewissen Rußbeladung im Dieselpartikelfilter oder/und eines anderen sensitiven Zustands im Abgasnachbehandlungssystem bzw. im Abgasstrang, wird die Einrichtung zur Reduzierung der Abgastemperatur wieder aktiviert bzw. hinzugeschaltet. Somit wird ein vorteilhaftes Abgasnachbehandlungssystem mit bedarfsgesteuerter Einrichtung zur Reduzierung der Abgastemperatur geschaffen, mit der eine Erhöhung des durchschnittlichen Kraftstoffverbrauchs vermieden werden kann.

Die Einrichtung zur Reduzierung der Abgastemperatur ist derart ausgebildet, dass im Abgasstrang ein das Abgas herunterkühlendes Medium zugeführt wird. Dieses herunterkühlende Medium wird vorzugsweise mittels einer Öffnung im Abgasstrang direkt dem Abgas zugeführt bzw. mit diesem vermischt oder in einem Wärmetauscher oder dergleichen mit dem Abgas in Wirkverbindung gebracht. Das herunterkühlende Medium kann dabei als flüssiges oder gasförmiges Medium ausgebildet sein.

Das Medium wird vorzugsweise in Form von Umgebungsluft bzw. Frischluft, die aus der Umgebung des Abgasstrangs gewonnen wird, diesem direkt beigemischt. Sofern die Umgebungsluft eine geringere Temperatur als das Abgas aufweist, was generell der Fall ist, kommt es zu einer Abkühlung des Abgases.

Die Einrichtung zur Reduzierung der Abgastemperatur kann einen im Abgasstrang angeordneten Diffusor umfassen, der je nach Bedarf deaktiviert bzw. umgangen oder aktiviert bzw. hinzugeschaltet wird. Durch Einsatz des Diffusors kann ein Medium aus der Umgebung des Abgasstrangs angesaugt und zur Kühlung des Abgases herangezogen werden.

Der Diffusor kann derart ausgebildet sein, dass seine Geometrie veränderbar ist und ein Durchlassquerschnitt des Diffusors über einen Verstellmechanismus verstellbar ist. Dabei ist der Diffusor beispielsweise derart verstellbar, dass seine eigentliche Diffusorwirkung in einer einstellbaren veränderbaren geometrischen Ausbildung (einer ersten geometrischen Extremstellung) gleich Null oder minimal ist und in einer weiteren einstellbaren veränderbaren geometrischen Ausbildung (einer zweiten geometrischen Extremstellung) eine maximale Diffusorwirkung erzielbar ist. Ferner können auch zwischen einer minimalen und maximalen Diffusorwirkung liegende Zwischenwerte durch entsprechende Verstellung des Diffusors erzielbar sein.

Der Diffusor kann beispielsweise mit Diffusorklappen ausgestattet sein, die einen Öffnungsquerschnitt zur Umgebung des Abgasstrangs, beispielsweise zu der Umgebungsluft, schließen oder eben diesen Öffnungsquerschnitt freisetzen und die Umgebungsluft durch Diffusorwirkung ansaugen. Gleichzeitig verändert sich dabei der Durchlassquerschnitt des Diffusors für das durch den Diffusor strömende Abgas. Durch entsprechende Verstellung der Diffusorklappen und damit des Durchlassquerschnitts des Diffusors bzw. des Öffnungsquerschnitts für die Umgebungsluft, ist die Kühlung des Abgases in verschiedenem Maßen variierbar. Sind die Diffusorklappen geschlossen gehalten, erfolgt keine Kühlung durch Umgebungsluft. Die Diffusorklappen können über den Verstellmechanismus und über einen mit diesem verbundenen fernsteuerbaren Aktuator verstellbar sein. Als Aktuator eignen sich unter anderem beispielsweise, pneumatische, hydraulische oder auch elektrische Stellmotoren (Pneumatikzylinder, Hydraulikzylinder, Schrittmotoren).

In einer alternativen Ausführungsform kann die Einrichtung zur Reduzierung der Abgastemperatur an Stelle eines verstellbaren Diffusors eine zuschaltbare Bypassleitung im Abgasstrang umfassen, in welcher ein Diffusor mit konstantem Durchlassquerschnitt angeordnet ist und durch welche das Abgas leitbar ist. Dazu kann eine entsprechende steuerbare Stelleinrichtung oder Ventileinrichtung vorgesehen sein, durch welche bei Bedarf das Abgas durch die Bypassleitung zur Abkühlung geleitet wird. Soll keine Abkühlung erfolgen, wird das Abgas durch die reguläre Abgasleitung ohne Diffusor geleitet. Somit wird auch hier eine variabel steuerbare Einrichtung geschaffen, die, wie auch ein variabel veränderbarer Diffusor, in Abhängigkeit verschiedener aus dem Abgassystem ableitbarer oder sensitiv ermittelbarer Zustandsgrößen deaktivierbar oder aktivierbar bzw. zuschaltbar oder abschaltbar ist.

Die Einrichtung zum Rußabbrand im Dieselpartikel bzw. im Rußpartikelfilter umfasst eine Zufuhr von Kraftstoff zur Verbrennung im Abgasstrang. Dabei wird vorzugsweise im vorhandenen Oxidationskatalysator eine vorgebbare Menge an Kraftstoff verbrannt und mittels Verbrennungswärme eine entsprechende Temperaturerhöhung des Abgases im Abgasstrang bzw. im Rußpartikelfilter erzielt, wodurch wiederum ein aktiver Rußabbrand bei niedrigen Motorlasten herbeigeführt wird, wenn ein vorgesehener passiver Rußabbrand aufgrund zu geringer Abgastemperaturen nicht erfolgen kann.

Derartige Systeme zur Abgasnachbehandlung eignen sich insbesondere für landwirtschaftliche Maschinen, beispielsweise Traktoren oder selbstfahrende Erntemaschinen, die einer hohen Anzahl von Betriebsstunden bei wechselnden Motorlasten ausgesetzt sein können und einen möglichst geringen Kraftstoffverbrauch bei Erfüllung aller gesetzlich vorgegebenen Abgasnormen aufweisen sollen.

Anhand der Zeichnungen, die zwei Ausführungsformen der Erfindung zeigen, werden nachfolgend die Erfindung sowie weitere Vorteile und vorteilhafte Weiterbildungen und Ausgestaltungen der Erfindung näher beschrieben und erläutert.

Es zeigt:
- Fig. 1: eine schematische Seitenansicht einer landwirtschaftlichen Maschine mit einem erfindungsgemäßen Abgasnachbehandlungssystem gemäß der Figuren 2 bis 5,
- Fig. 2: ein Blockschaltbild eines erfindungsgemäßen Abgasnachbehandlungssystems mit verstellbarem Diffusor in aktivierter Stellung,
- Fig. 3: ein Blockschaltbild des erfindungsgemäßen Abgasnachbehandlungssystems aus Figur 2 mit verstellbarem Diffusor in deaktivierter Stellung und
- Fig. 4: ein Blockschaltbild einer alternativen Ausführungsform eines erfindungsgemäßen Abgasnachbehandlungssystems mit statischem Diffusor in einer Bypassleitung.

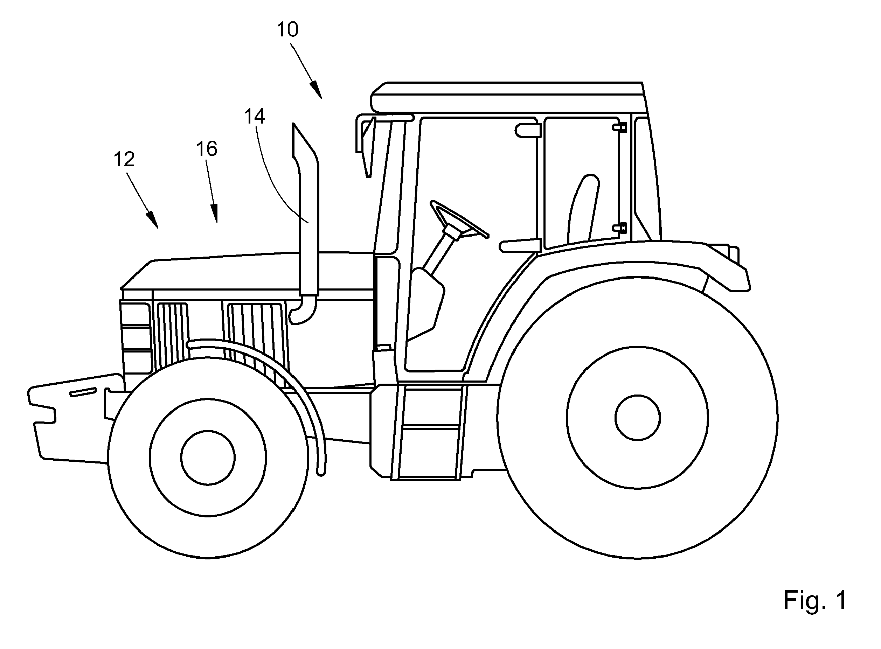

In Figur 1 ist ein landwirtschaftliches Fahrzeug 10 in Form eins Traktors oder Schleppers gezeigt, welches über einen Verbrennungsmotor 12 angetrieben wird und über ein erfindungsgemäßes in einem Abgasstrang 14 des Verbrennungsmotors 12 angeordnetes Abgasnachbehandlungssystem 16 verfügt. Das Fahrzeug 10 ist hier nur beispielhaft als Traktor oder Schlepper dargestellt. Es können auch andere landwirtschaftliche Maschinen, die über einen Verbrennungsmotor 12 betrieben werden, beispielsweise selbstfahrende Feldspritzen, Mähdrescher, Feldhäcksler, oder andere selbstfahrende Erntemaschinen, mit einem erfindungsgemäßen Abgasnachbehandlungssystem 16 ausgebildet sein.

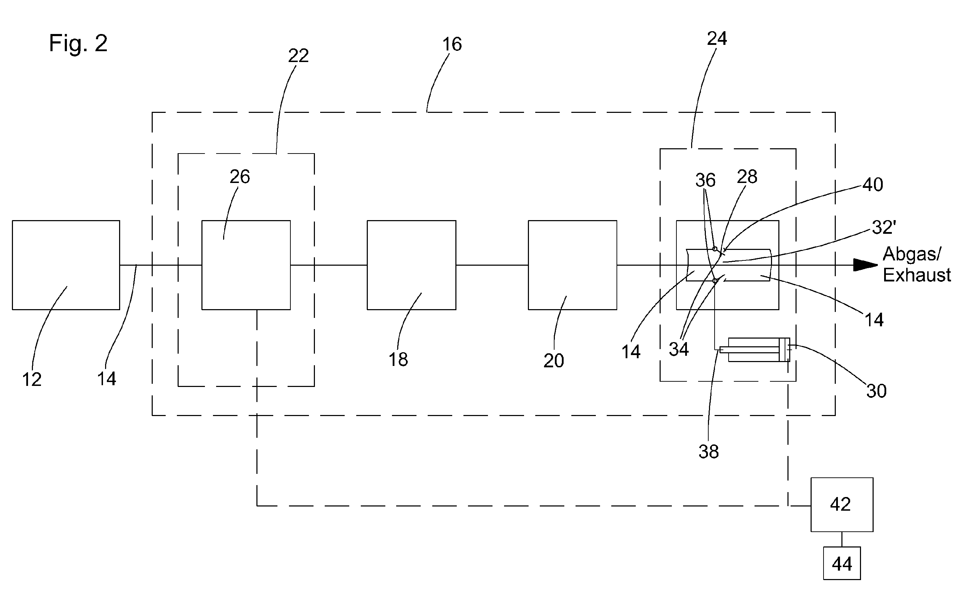

Wie insbesondere in den Figuren 2 bis 4 deutlich wird, verfügt das Abgasnachbehandlungssystem 16 über einen im Abgasstrang 14 des Verbrennungsmotors 12 angeordneten Oxidationskatalysator 18, einen Rußpartikelfilter 20 oder auch Dieselpartikelfilter, eine Einrichtung 22 zum Rußabbrand im Rußpartikelfilter sowie eine nachgeschaltete Einrichtung 24 zur Reduzierung der Abgastemperatur im Abgasstrang 14.

Die Einrichtung 22 zum Rußabbrand im Rußpartikelfilter 20 umfasst eine Kraftstoffeinspritzvorrichtung 26, mittels der Kraftstoff in den Abgasstrang 14 eingespritzt werden kann, welcher dann durch Verbrennen zur Erhöhung der Abgastemperatur zum Rußabbrand im Rußpartikelfilter 20 beiträgt.

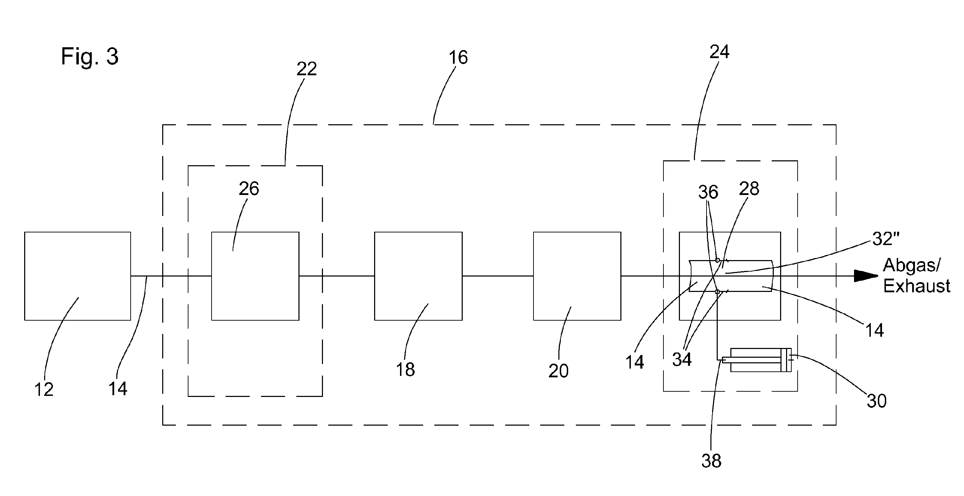

Die Einrichtung 24 zur Reduzierung der Abgastemperatur im Abgasstrang 14 umfasst in einer ersten Ausführungsform gemäß Figuren 2 und 3 einen verstellbaren Diffusor 28, der über einen Verstellmotor oder Aktuator 30 derart verstellbar ist, dass die Geometrie des Diffusors 28 verändert wird und eine im Diffusor 28 ausgebildete Durchlassöffnung, durch welche das Abgas geleitet wird, von einer minimalen Durchlassöffnung 32' (aktivierter Zustand der Einrichtung zur Reduzierung der Abgastemperatur, siehe Figur 2) in eine maximale Durchlassöffnung 32" (deaktivierter Zustand der Einrichtung zur Reduzierung der Abgastemperatur, siehe Figur 3) verstellt wird. Die Verstellung der Durchlassöffnung 32', 32" erfolgt über verstellbare Diffusorklappen (34) bzw. an der Diffusorwandung ausgebildete Wandelemente die beispielsweise über eine Scharnierverbindung 36 in ihrer Stellung zur Wandung des Abgasstrangs 14 variierbar sind, wobei die Verstellung über einen zwischen dem Aktuator 30 und den Diffusorklappen 34 ausgebildeten Verstellmechanismus 38 erfolgt. So werden bei einer aktivierten Stellung (Figur 2) die Diffusorklappen 34 ins Innere des Abgasstrangs 14 bewegt, wodurch die minimale Durchgangsöffnung 32' geformt und gleichzeitig eine Ansaugöffnung 40 zur Umgebung des Abgasstrangs 14 gebildet bzw. geöffnet wird. In entgegen gesetzter Weise können die Diffusorklappen 34 ausgehend von dieser aktivierten Stellung wieder zur Wandung des Abgasstrangs 14 nach außen bewegt bzw. verstellt werden, wodurch die maximale Durchgangsöffnung 32" für das Abgas geschaffen und gleichzeitig die Ansaugöffnung 40 wieder geschlossen wird (deaktivierte Stellung, Figur 3). Alternativ könnten die über Scharnierverbindungen 36 mit der Wandung des Abgasstrangs 14 verbundenen Diffusorklappen 34 auch als axial oder zum Umfang des Abgasstrangs verschiebbare Schiebeelemente (nicht gezeigt) ausgebildet sein, die in einer ersten Stellung die Ansaugsöffnung 40 zur Umgebung öffnen (aktivierte Stellung) und in einer weiteren (verschobenen) Stellung die Ansaugöffnung 40 zur Umgebung schließen (deaktivierte Stellung). Die Schiebeelemente (nicht gezeigt) können in entsprechend angepasster Form von einem ähnlichen Aktuator 30 verstellt bzw. verschoben werden.

Vorzugsweise ist eine elektronische Steuereinheit 42 vorgesehen, die verschiedene Zustandsdaten 44 des Fahrzeugs 10 und/oder des Motors 12 und/oder des Abgasnachbehandlungssystems 16 bzw. des Abgasstrangs 14 signalisiert bekommt bzw. entsprechende Steuersignal empfängt. Derartige Steuersignale können beispielsweise in Abhängigkeit von der Zeit allgemein, von der Fahrgeschwindigkeit des Fahrzeugs 10, von der Drehzahl des Motors 12 oder von Temperaturen im Oxidationskatalysator 18, im Dieselpartikelfilter 20, im übrigen Abgasstrang 14, in der Umgebung des Abgasstrangs 14 etc., von entsprechenden Sensoren geliefert werden, woraufhin, entsprechend eines in der Steuereinheit 42 abgelegten Steueralgorithmus, ein Steuersignal zur Aktivierung/Deaktivierung der Einrichtung 22 zum Rußabbrand (bzw. zur Ansteuerung der Kraftstoffeinspritzvorrichtung 26) und/oder zur Aktivierung/Deaktivierung der Einrichtung 24 zur Reduzierung der Abgastemperatur (bzw. zur Ansteuerung des Aktuators 30) generiert wird.

Gemäß obiger Ausführungen wird ein schaltbarer Diffusor 28 vorgeschlagen, welcher vorzugsweise nur aktiviert wird, wenn eine Regeneration des Dieselpartikelfilters 20, also ein Rußabbrand erforderlich ist. Im regulären Betrieb des Fahrzeugs 10 bzw. des Motors 12, d. h. bei Normallast- und Hochlastbetrieb erfolgt ein Rußabbrand im Dieselpartikelfilter 20 selbsttätig durch die hohen Abgastemperaturen. In diesen Lastbereichen ist der Diffusor 28 vorzugsweise in seiner maximalen Durchlassöffnungsstellung 32" und somit die Einrichtung zur Erhöhung der Abgastemperatur quasi deaktiviert, wobei die Ansaugöffnung 40 geschlossen ist. Im Niedriglast- oder Leerlaufbereich kann der Zustand eintreten, dass eine Regeneration des Dieselpartikelfilters 20 nicht selbsttätig erfolgt, obwohl sie aufgrund einer erhöhten Rußbeladung des Dieselpartikelfilters 20 stattfinden sollte. Dieser Zustand wird durch die oben angesprochene Sensorik erfasst und gemäß des Steueralgorithmus ein Steuersignal generiert, das die Einrichtung 22 zum Rußabbrand aktiviert bzw. die Kraftstoffeinspritzvorrichtung 26 startet. Die Kraftstoffeinspritzung in den Abgasstrang 14 führt zur Erhöhung der Temperatur des Abgases, die wiederum den Rußabbrand fördert bzw. unterstützt bzw. erst in Gang setzt. Infolge dessen ist es erforderlich das Abgas aufgrund der erhöhten Temperatur nach verlassen des Dieselpartikelfilters 20 im Abgasstrang 14 wieder herunterzukühlen, was durch die beschriebene Einrichtung 24 zur Reduzierung der Abgastemperatur erfolgt. Der Aktuator 30 wird derart angesteuert, dass die Diffusorklappen 34 nach innen bewegt werden und eine Ansaugöffnung 40 zur Umgebung geöffnet wird (analog können auch Schiebeelemente entsprechend verschoben werden, dass eine Ansaugöffnung 40 geöffnet wird). Durch die dadurch aktivierte Diffusorwirkung wird Umgebungsluft bzw. Frischluft in den Abgasstrang 14 gesogen und das Abgas heruntergekühlt. Nach erfolgter Abkühlung des Abgases bzw. sobald der oben genannte Zustand überwunden ist (was sensorisch entsprechend der Zustandsgrößen 44 ermittelt und signalisiert wird), wird die Einrichtung 22 zum Rußabbrand sowie die Einrichtung 24 zur Reduzierung der Temperatur wieder über die elektronische Steuereinheit 42 deaktiviert, wobei der Diffusor 28 durch den Aktuator 30 aus seiner Stellung mit minimaler Durchgangsöffnung 32' wieder in seine deaktivierte Stellung, d.h. in seine Stellung mit maximaler Durchlassöffnung 32" verbracht wird, in der die Ansaugöffnung 40 geschlossen wird bzw. ist.

Die Vorteile des oben beschriebenen Abgasnachbehandlungssystems 16 gegenüber bekannten Systemen zur Abgasnachbehandlung liegen darin, dass aufgrund der Anordnung eines statischen Diffusors im Abgasstrang 14 bzw. in einer Einrichtung zur Reduzierung der Temperatur im Abgas gleichzeitig auch ein höherer Abgasgegendruck vorherrscht. Dies wiederum ist mit einem höheren Kraftstoffverbrauch verbunden. Eine variable Einrichtung 24 zur Reduzierung des Abgases hingegen ermöglicht, diese Erhöhung des Abgasgegendrucks bzw. die Erhöhung des Kraftstoffverbrauchs nur zeitweise, also nur während der aktiven Regenerationsphase für den Dieselpartikelfilter 20 in Kauf zu nehmen, also nur dann, wenn kein Normal- oder Hochlastbetrieb vorliegt. Da der in seiner Geometrie variabel ausgebildete Diffusor 28 nur bei Bedarf von der Steuereinheit 42 aktiviert wird, also nur während eines Bruchteils der gesamten Betriebszeit des Fahrzeugs 10, kann dieser zudem so ausgelegt werden, dass eine wesentliche effektivere Kühlung des Abgases erfolgt, da hier bei der Auslegung eines statischen Diffusors kein Kompromiss zwischen genereller Abgasgegendruckerhöhung und effektiver Kühlung des Abgases eingegangen werden muss. Ein weiterer Vorteil besteht darin, dass die Ansaugöffnung 40 automatisch geschlossen ist, sobald die Einrichtung 24 zur Reduzierung der Abgastemperatur (bzw. der Diffusor 28) deaktiviert ist. Dadurch wird sichergestellt, dass keine Rückströmung von Abgas über den Diffusor 28 erfolgen kann, wenn beispielsweise das Fahrzeug 10 in der Werkstatt mit einem Abgasschlauch zur Ableitung der Abgase verbunden ist.

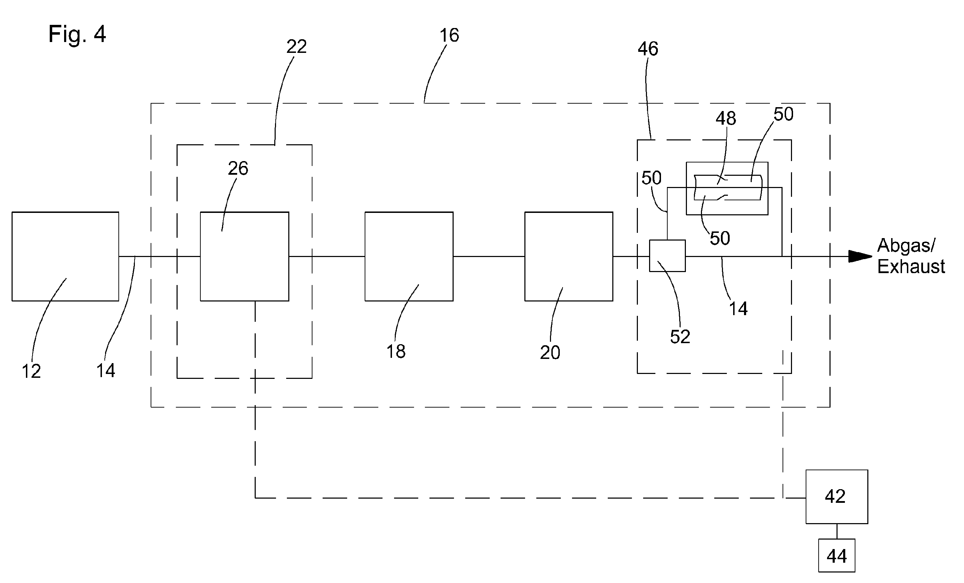

Gemäß Figur 4 umfasst eine alternative Ausführungsform des Abgasnachbehandlungssystems 16 eine Einrichtung 46 zur Reduzierung der Abgastemperatur, die sich von der in den Figuren 2 und 3 dargestellten Ausführungsform unterscheidet. Sie unterscheidet sich dadurch, dass ein in seiner Geometrie konstanter, also statischer Diffusor 48 in einer Bypassleitung 50, die parallel zu dem Abgasstrang 14 angeordnet ist, an Stelle des in seiner Geometrie variierbaren Diffusors 28 vorgesehen ist. Dieser wird über eine Stelleinrichtung 52 oder über eine Ventileinrichtung von der elektronischen Steuereinheit 42 in analoger Weise angesteuert, so dass in einem Zustand der aktiven Regeneration für das Dieselpartikelfilter 20 die Einrichtung 46 zur Reduzierung der Abgastemperatur dadurch aktiviert wird, das das Abgas über die Stelleinrichtung 52 durch die Bypassleitung 50 und damit durch den Diffusor 48 geleitet wird. Sobald dieser Zustand einer aktiven Regeneration für das Dieselpartikelfilter abgeschlossen ist wird die Stelleinrichtung 50 in Abhängigkeit der Zustandsgrößen 44 von der Steuereinheit 42 derart angesteuert, dass das Abgas wieder durch den regulären Abgasstrang 14 ohne Diffusor 48 geleitet wird. Die Funktionsweise im Übrigen sowie die Wirkung des Abgasnachbehandlungssystems 16 in der alternativen Ausführungsform in Figur 4 entspricht der Funktionsweise und Wirkung wie bereits zu dem obigen Ausführungsbeispiel gemäß der Figuren 2 und 3 beschrieben wurde.

Auch wenn die Erfindung lediglich anhand zweier Ausführungsbeispiele beschrieben wurde, erschließen sich für den Fachmann im Lichte der vorstehenden Beschreibung sowie der Zeichnung viele verschiedenartige Alternativen, Modifikationen und Varianten, die unter die vorliegende Erfindung fallen.

## Patentansprüche

1. Abgasnachbehandlungssystem (16) mit einem Abgasstrang (14), einem Oxidationskatalysator (18), einem Rußpartikelfilter (20), einer Einrichtung (22) zum Rußabbrand im Rußpartikelfilter (20) sowie einer nachgeschalteten Einrichtung (24, 46) zur Reduzierung der Abgastemperatur im Abgasstrang (14), **dadurch gekennzeichnet, dass** die Einrichtung (24, 46) zur Reduzierung der Abgastemperatur deaktivierbar ist.

2. System nach Anspruch 1, **dadurch gekennzeichnet, dass** durch die Einrichtung (24, 46) zur Reduzierung der Abgastemperatur im Abgasstrang (14) ein das Abgas herunterkühlendes Medium zuführbar ist.

3. System nach Anspruch 2, **dadurch gekennzeichnet, dass** das Medium Umgebungsluft ist.

4. System nach einem der Ansprüche 1 bis 3, **dadurch gekennzeichnet, dass** die Einrichtung (24, 46) zur Reduzierung der Abgastemperatur einen im Abgasstrang (14) angeordneten Diffusor (28, 48) umfasst.

5. System nach Anspruch 4, **dadurch gekennzeichnet, dass** der Diffusor (28) eine veränderbare Geometrie aufweist und ein Durchlassquerschnitt des Diffusors (28) über einen Verstellmechanismus (38) verstellbar ist.

6. System nach Anspruch 5, **dadurch gekennzeichnet, dass** der Diffusor (28) mit Diffusorklappen (34) ausgestattet ist, durch deren Verstellung der Durchlassquerschnitt des Diffusors (28) variierbar ist, wobei die Diffusorklappen (34) über den Verstellmechanismus (38) und über einen mit diesem verbundenen fernsteuerbaren Aktuator (30) verstellbar sind.

7. System nach Anspruch 4, **dadurch gekennzeichnet, dass** die Einrichtung (46) zur Reduzierung der Abgastemperatur eine zuschaltbare Bypassleitung (50) im Abgasstrang (14) umfasst, in welcher der Diffusor (48) angeordnet ist und durch welche das Abgas leitbar ist.

8. System nach einem der vorhergehenden Ansprüche, **dadurch gekennzeichnet, dass** das die Einrichtung (22) zum Rußabbrand im Rußpartikelfilter eine Zufuhr von Kraftstoff zur Verbrennung im Abgasstrang (14) umfasst.

9. Landwirtschaftliches Fahrzeug (10) mit einem Verbrennungsmotor (12) und einem Abgasnachbehandlungssystem (16) nach einem der Ansprüche 1 bis 8.
